# EUROPÄISCHE PATENTSCHRIFT

(11) **EP 0 477 400 B1**
(45) Veröffentlichungstag und Bekanntmachung des Hinweises auf die Patenterteilung: **26.04.2000**
(21) Anmeldenummer: 90118417.6
(22) Anmeldetag: 25.09.1990
(51) Int. Cl.: H01L 41/09

(54) **Anordnung für einen in Hubrichtung wirkenden adaptiven, mechanischen Toleranzausgleich für den Wegtransformator eines piezoelektrischen Aktors**
Device for compensating the tolerance in the lift direction of the displacement transformer of a piezoelectric actuator
Dispositif compensateur de tolérance dans la direction de mouvement du transformateur de déplacement d'un dispositif d'actionnement piézoélectrique

(43) Veröffentlichungstag der Anmeldung: 01.04.1992
(73) Patentinhaber: SIEMENS AKTIENGESELLSCHAFT, 80333 München (DE)
(72) Erfinder: Stein, Dieter, Dipl.-Phys., W-8150 Holzkirchen (DE); Kleinschmidt, Peter, Dipl.-Phys., W-8000 München 90 (DE)

(56) Entgegenhaltungen:
- FR-A- 2 554 516
- JP-A- 48 004 823
- US-A- 4 725 002
- US-A- 4 782 807
- US-A- 4 858 439

## Beschreibung

Die vorliegende Erfindung betrifft eine Anordnung für einen in Hubrichtung wirkenden Wegtransformator eines piezoelektrischen Aktors.

Im Gegensatz zu elektromagnetischen Aktoren positionieren andere elektromechanische Wandler, wie z. B. piezoelektrische Aktoren, absolut zu ihrem Befestigungspunkt. Das bedeutet, daß Setzeffekte des betreffenden Stapelaufbaus, Temperaturgradienten im Bauteil oder unterschiedliche Temperaturausdehnungskoeffizienten der verwendeten Materialien eine Änderung der Position des zu positionierenden Bauteils bewirken. Diese Effekte sind in Hubrichtung zum Teil größer, als der mögliche Hub durch das piezoelektrische Aktorelement und können daher nicht mit einer Positionsregelung ausgeglichen werden.

Für direkt, d.h. ohne Wegtransform arbeitende Aktoren, die vor allem für Dieseleinspritzventile, sind bereits Lösungen für sog. adaptive Toleranzausgleiche vorgeschlagen worden, siehe z. B. DE 36 08 494 A.

In der US-A-4 858 439 wird eine Vorrichtung mit einem Gehäuse offenbart, einem Kolben mit großem Durchmesser und einem Kolben mit kleinem Durchmesser, einer Hydraulikkammer zwischen den beiden Kolben, einer Hydraulikflüssigkeit in der Hydraulikkammer, sowie ein definiertes Leck zwischen Gehäuseteilen und Kolben. Insbesondere wird offenbart, daß bei Betätigung eines Aktors ein Teil der Hydraulikflüssigkeit über das definierte Leck in ein hermetisch abgeschlossenes Reservoir gedrückt wird.

Aus der JP-A-48 004 823 ist bekannt, daß eine zwischen den Kolben angesiedelte zylindrische Kammer mit Öl gefüllt ist. In dieser Vorrichtung wird der Kolben mit dem größeren Durchmesser gegenüber dem anderen Kolben durch einen Aktoator bewegt, wobei der Kolben mit dem kleineren Durchmesser stoßartig bewegt wird und zwar mehr als der Kolben mit dem größeren Durchmesser.

Der vorliegenden Erfindung liegt die Aufgabe zugrunde, eine Anordnung der eingangs genannten Art zum Bewirken einer Wegtransformation zu schaffen, die bei einfachem Aufbau zuverlässig arbeitet und die dem Stand der Technik anhaftenden Nachteile beseitigt.

Die Aufgabe wird gemäß der Patentansprüche 1 oder 19 gelöst.

Die Auslenkung des Aktors wird gemäß Anspruch 1 über eine Hydraulikkammer übertragen, wobei die Hydraulikkammer ein definiertes Leck mit einer vorbestimmten Leckrate besitzt. Die Auslenkung des Aktors wird über einen Hubkolben in die Hydraulikkammer eingeleitet und über einen Arbeitskolben auf die anzutreibende, relativ zu positionierende Masse übertragen, die in ihrer Ruhelage mittels einer oder mehrerer Federn relativ zu einer vorgegebenen Position gehalten ist.

Eine weitere Lösung der genannten Aufgabe gemäß Anspruch 19 sieht eine Anordnung für einen in Hubrichtung wirkenden adaptiven, mechanischen Toleranzausgleich für den Wegtransformator eines piezoelektrischen Aktors vor, bei der die Auslenkung des antreibenden Systems über zwei ineinander steckende Bauteile übertragen wird, wobei das eine Bauteil so in das andere Bauteil eingepaßt ist, daß sich diese nicht direkt berühren und über eine viskose Flüssigkeit die Auslenkung von dem einen Bauteil auf das andere Bauteil übertragen wird, wobei die Abmessungen der Bauteile derart in Abhängigkeit von der Viskosität der verwendeten Flüssigkeit gewählt sind, daß Ausgleichsvorgänge über den gesamten Hubweg des Systems in einer Mindestvorgabezeit erfolgen, jedoch die gewünschten Hubvorgänge mit den maximalen sich ergebenden Zeiten für die Auslenkung übertragen werden.

Vorteilhafte Weiterbildungen der Erfindung sind durch die in den Unteransprüchen angegebenen Merkmale gekennzeichnet.

Im folgenden wird die vorliegende Erfindung anhand mehrerer, vorteilhafte Ausführungsbeispiele der Erfindung betreffender Figuren im einzelnen beschrieben.
- Fig. 1: zeigt ein erstes Ausführungsbeispiel der erfindungsgemäßen Anordnung.
- Fig. 2: zeigt ein zweites Ausführungsbeispiel der erfindungsgemäßen Anordnung, einen Toleranzausgleich der die Scherkraft einer viskosen Flüssigkeit ausnutzt. Bei langsamen Bewegungen des unteren Bauteils 8 verbleibt das Obere 7 am Anschlag 10. Schnellen Bewegungen folgt es dagegen.
- Fig. 3: zeigt ein drittes Ausführungsbeispiel der erfindungsgemäßen Anordnung.
- Fig. 4: zeigt eine besondere Ausführungsform der erfindungsgemäßen Anordnung, die zusätzlich einen Voratsbehälter für die Hydraulikflüssigkeit innerhalb der Anordnung aufweist.

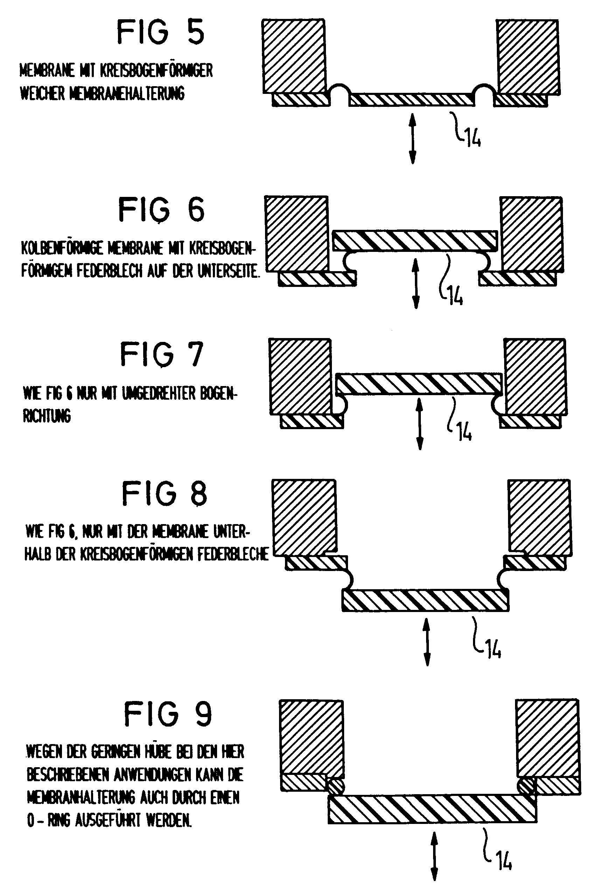

- Fig. 5, Fig. 6, Fig. 7, Fig. 8 und Fig. 9: zeigen verschiedene Ausführungsformen einer für die erfindungsgemäße Anordnung verwendeten Membran und deren Halterung.
- Fig. 10: zeigt ein weiteres Ausführungsbeispiel der erfindungsgemäßen Anordnung mit einer Ausgleichskammer.
- Fig. 11: zeigt eine besondere Ausführungsform der erfindungsgemäßen Anordnung, bei der ein Zylinderbauteil und ein Kolbenbauteil kegelförmig ausgebildet sind.
- Fig. 12: zeigt ein besonderes Ausführungsbeispiel der Anordnung gemäß Fig. 2, bei der eine Gummimanschette als Abdichtung eines Ringspalts zwischen einem Zylinderbauteil und einem Kolbenbauteil vorgesehen ist.

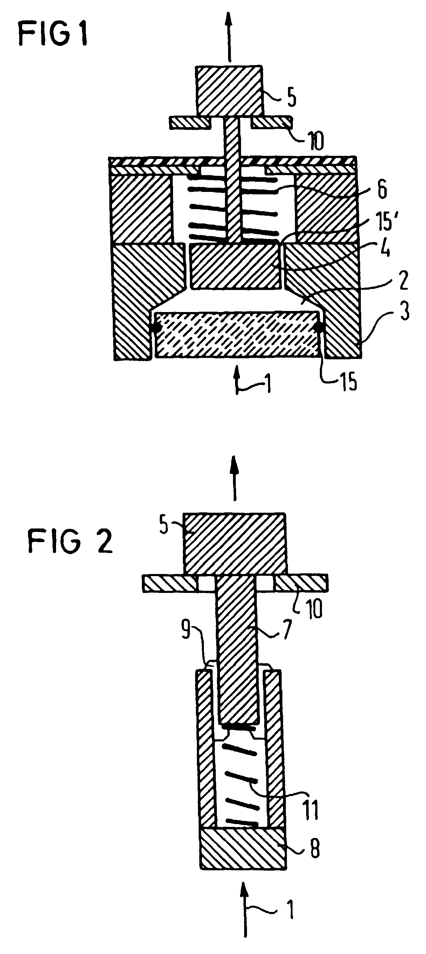

Wie bereits erläutert, zeigt Fig. 1 eine erste Ausführungsform der erfindungsgemäßen Anordnung für einen in Hubrichtung wirkenden adaptiven, mechanischen Toleranzausgleich für den Wegtransformator eines piezoelektrischen Aktors.

Der mit der erfindungsgemäßen Anordnung erzielbare Toleranzausgleich erfolgt über eine Hydraulikkammer 2. Diese Hydraulikkammer 2 ist im wesentlichen zylinderförmig, weist jedoch an ihrem oberen Ende zwischen einem von einem piezoelektrischen Aktor 1 getriebenen Hubkolben 3 und einem darüber angeordneten Arbeitskolben 4 eine Stumpfkegelform auf. Die Auslenkung des Aktors 1 wird über die Hydraulikkammer 2 mittels einer darin befindlichen Hydraulikflüssigkeit übertragen, wobei die Hydraulikkammer 2 ein definiertes Leck mit einer Leckrate ΔV/(5. tₘₐₓ) besitzt, wobei ΔV die Volumenänderung in der Hydraulikkammer 2 ist, die von der Auslenkung des Aktors 1 oder des Ausgangs des wegtransformators verursacht wird, und tₘₐₓ die zu spezifizierende maximale Hubzeit des Aktorsystems ist. Die Auslenkung des Aktors 1 wird über den Hubkolben 3 in die Hydraulikkammer 2 eingeleitet und über den Arbeitskolben 4 auf die anzutreibende relativ zu positionierende Masse, z. B. eine Nadelmasse 5 eines Nadelventils, übertragen, die in ihrer Ruhelage mittels einer oder mehrerer Federn 6 relativ zu einer vorgegebenen Position gehalten ist. Mit der Feder 6 wird der obere Kolben 4 mit seiner anhängenden, zu positionierenden Masse 5 auf den Anschlag 10 gedrückt. Durch den Ringspalt 15' mit seinem Strömungswiderstand ist dieser Vorgang zeitlich genau zu dosieren. Schnelle Bewegungen des unteren Kolbens werden über die Hydraulikflüssigkeit auf den oberen Kolben 4 übertragen.

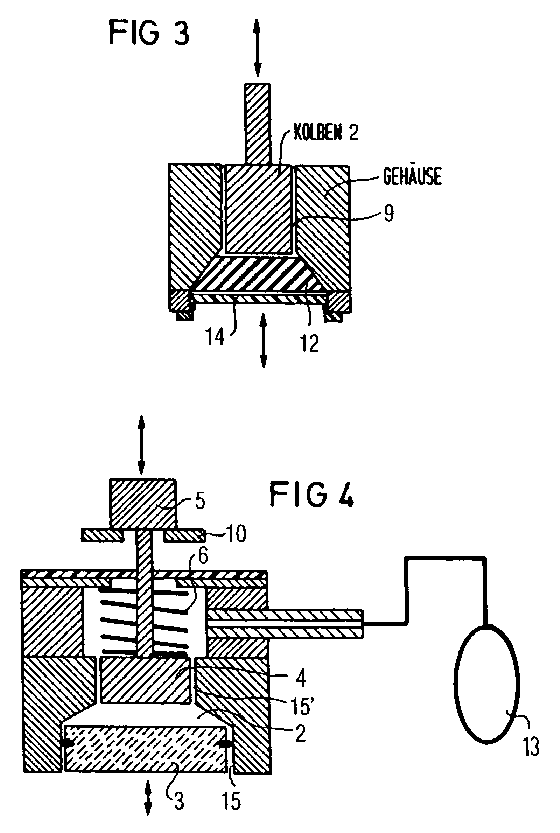

Das Volumen V der Hydraulikkammer 2 wird in Relation zur Volumenänderung ΔV durch das antreibende System klein, wobei gilt: 0.01 <(ΔV)/V<10. Die Hydraulikkammer 2 ist mit einer Hydraulikflüssigkeit mit niedriger Kompressibilität gefüllt. Die Kompressibilität der Hydraulikflüssigkeit kann dadurch verringert sein, daß ihr Partikel aus einem Material mit erheblich geringerer Kompressibilität zugesetzt sind, die eine Größe von 1 bis 100 µm aufweisen. Die Partikel können aus Kunststoffen bestehen, sie können jedoch alternativ dazu aus Gummiwerkstoffen oder aus Metallen bestehen. In Weiterbildung der Erfindung kann ein Teil der Hydraulikflüssigkeit durch einen flexiblen Körper 12, vergl. Fig. 3, ersetzt sein, wobei dieser aus Materialien geringerer Kompressibilität als die der Hydraulikflüssigkeit besteht. Der Körper 12 Kann entweder aus Gummiwerkstoffen oder aus Kunststoffen, vorzugsweise Silikonkautschuk, bestehen.

Die Anordnung gemäß der Erfindung ist gemäß einem bevorzugten Ausführungsbeispiel derart ausgeführt, daß die Hydraulikflüssigkeit nicht aus dem Gehäuse austreten kann, also hermetisch eingeschlossen ist. Eine weitere Ausführungsform der Anordnung sieht vor, daß ein Verratsbehälter 13 angeordnet ist, aus dem eventuell auftretende Leckmengen der Kammer ausgeglichen werden können, vergl. Fig. 4.

Eine der beiden oder beide Kolben 3, 4 können durch eine Membran 14 ersetzt sein, die in Hubrichtung hohe Nachgiebigkeit besitzt, jedoch den Drücken in der Hydraulikkammer 2 nur minimal nachgiebt, vergl. Fig. 3.

Die bewegten Massen der erfindungsgemäßen Anordnung sind vorteilhafterweise minimiert, wozu leichte Materialien für alle bewegten Massen verwendet sind und die Bauvolumina klein gehalten sind.

Zur Erreichung der Arbeitskraft des Arbeitakolbens 4 ist in der hydraulikkammer 2 ein Druck von 2 bis 250 bar, vorzugsweise von 2 bis 70 bar vorgesehen, wodurch die Fläche des Arbeitskolbens 4 bestimmt ist.

Die Hydraulikflüssigkeit ist gasblasenfrei in die Hydraulikkammer 2 eingefüllt.

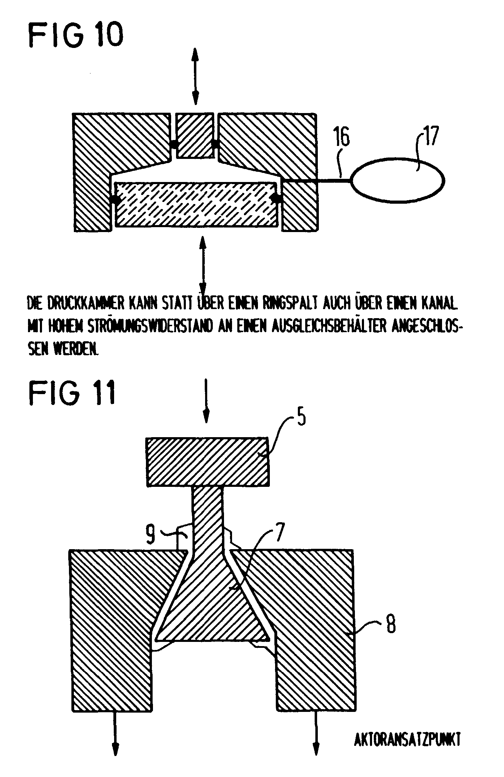

Das kleine definierte Leck der Hydraulikkammer 2 ist durch einen Ringspalt 15, 15' zwischen einem oder beiden Kolben 3, 4 und der jeweiligen Zylinderwand realisiert, wobei der Ringspalt 15, 15' einen genügend hohen Strömungswiderstand aufweist, vergl. Fig. 1. Das kleine definierte Leck der Hydraulikkammer 2 kann auch durch einen Kanal 16 mit genügend hohem Strömungswiderstand zwischen der Hydraulikkammer 2 und einer Ausgleichskammer 17 realisiert sein, vergl. Fig. 10. Vorzugsweise ist das Volumen der Ausgleichskammer 17 um den Faktor 2 - 10 größer als dasjenige der Hydraulikkammer 2.

Der betreffende Kolben oder die Membran 14 der Anordnung wird mit einer Feder 6 gegen die Hubrichtung gedrückt, wodurch der Arbeitskolben 4 nach Zeiten >> 5 . tₘₐₓ mit Sicherheit eine Positich einnimmt, die durch einen Anschlag 10 begrenzt ist, z. B. als die geschlossene Position einer Ventilnadel.

Auf die Hydraulikflüssigkeit wird ein statischer Druck ausgeübt.

Das Flächenverhältnis zwischen dem Hubkolben 3 und dem Arbeitskolben der erfindungsgemäßen Anordnung liegt vorzugsweise zwi-schen 1:1 und 30:1.

Eine weitere erfindungsgemäße Ausführungsform, die in Fig. 2 gezeigt ist, sieht vor, daß die Auslenkung des antreibenden Systems über zwei ineinandersteckende Bauteile 7, 8 übertragen wird, wobei das eine Bauteil 7 so in das andere Bauteil 8 eingepaßt ist, daß sich diese nicht direkt berühren und über eine viskose Flüssigkeit 9 die Auslenkung von dem einen Bauteil 7 auf das andere Bauteil 8 übertragen wird, wobei die Abmessungen der Bauteile 7, 8 derart in Abhängigkeit von der Viskosität der verwendeten Flüssigkeit 9 gewählt sind, daß Ausgleichsvorgange über den gesamten Hubweg des Systems in der Zeit 5 . tₘₐₓ erfolgen, jedoch die gewünschten Hubvorgänge mit den maximalen Zeiten tₘₐₓ für die Auslenkung übertragen werden. Das eine Bauteil stellt als das zweite Bauteil 8 einen Zylinder dar, und das andere Bauteil stellt als das erste Bauteil einen Kolben dar, vergleiche Fig. 2, wobei zwischen Zylinder und Kolben ein Ringspalt verbleibt, der mit der viskosen Flüssigkeit 9 gefüllt ist. Das eine Bauteil 7 ist in dieser Ausführungsform durch eine Zugfeder 11 derart vorgespannt, daß die zu positionierende Masse 5 in Ruhelage an dem Anschlag 5 liegt.

Gemäß einer besonderen Ausführungsform sind der Kolben und der Zylinder kegelförmig ausgebildet, vergl. Fig. 11. Der Toleranzausgleich entspricht dem in Fig. 2 gezeigten, jedoch mit erhöhter zu übertragender Kraft durch kegelförmige Flächen.

Als die viskose Flüssigkeit 9 ist eine solche ausgewählt, die mit zunehmender Scherbelastung eine zunehmende Viskosität aufweist.

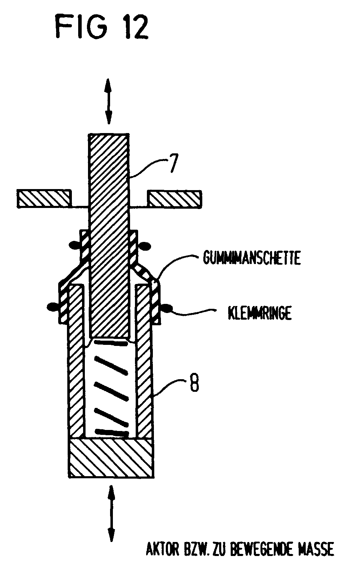

Die viskose Flüssigkeit zwischen den Bauteilen 7, 8 ist vorteilhafter Weise zur Umgebung hin, vorzugsweise durch Gummimanschette, abgeschlossen, vergl. Fig. 12. Der gedichtete Ringspalt schützt die viskose Flüssigkeit vor Verschmutzung und Auswaschung.

Eine weitere Ausführungsform sieht vor, daß die viskose Flüssigkeit in einem Ausmaß viskos und unempfindlich gegen Umwelteinflüsse ist, daß deren hermetischer Einschluß entfallen kann. Die Viskosität der Flüssigkeit entspricht derjenigen von Fetten (>1000 Pa.s).

Es kann erfindungsgemäß auch vorgesehen sein, daß die viskose, hydraulische Flüssigkeit 9 in ihrer Viskosität elektrisch beeinflußbar ist.

Vorteilhafterweise sind Kolben und Zylinder aus unterschiedlichen Materialien gefertigt, deren Temperaturausdehnungskoeffizienten so gewählt sind, daß sich der Ringspalt mit steigender Temperatur so verengt, daß eine wegen der steigenden Temperatur sinkende Viskosität und damit ein erhöhter Durchsatz nahezu ausgeglichen werden (vgl. Anspruch 1).

## Patentansprüche

1. Wegtransformator für einen piezoelektrischen Aktor (1) mit Toleranzausgleich in Hubrichtung, bestehend aus:
- einer mit einer Hydraulikflüssigkeit gefüllten Hydraulikkammer (2),
- einem vom Aktor (1) beaufschlagten Hubkolben (3), der zusammen mit einem Arbeitskolben (4) und einem Gehäuse die Hydraulikkammer (2) darstellt,
- wobei
-- der Arbeitskolben (4) mit einer zu positionierenden federunterstützten Masse (5) verbunden ist,
-- Auslenkungen des Aktors (1) über die Hydraulikkammer (2) bis zur zu positionierenden Masse (5) übertragbar sind,
-- durch eine vorgegebene Leckrate an der Hydraulikkammer (2) eine maximale Hubzeit tₘₐₓ bei einem Hub des Aktors (1) der zu positionierenden Masse (5) vorgegeben ist, und
-- Kolben und Gehäuse aus unterschiedlichen Materialien gefertigt sind, deren Temperaturausdehnungskoeffizienten so gewählt sind, daß dadurch eine aufgrund steigender Temperatur sinkende Viskosität der Hydraulikflüssigkeit und ein damit erhöhter Durchsatz der Hydraulikflüssigkeit nahezu ausgleichbar sind.

2. Wegtransformator nach Anspruch 1,
- bei dem die Hydraulikkammer (2) mit einer Hydraulikflüssigkeit niedriger Kompressibilität gefüllt ist.

3. Wegtransformator nach Anspruch 2,
- bei dem die Kompressibilität der Hydraulikflüssigkeit dadurch verringert ist, daß ihr Partikel aus einem Material mit erheblich geringerer Kompressibilität zugesetzt sind, die eine Größe von 1-100 µm aufweisen.

4. Wegtransformator nach Anspruch 3,
- bei dem die Partikel aus einem Kunststoff, aus einem Gummiwerkstoff oder aus Metall bestehen.

5. Wegtransformator nach Anspruch 4,
- bei dem ein Teil der Hydraulikflüssigkeit durch einen flexiblen Körper (12) ersetzt ist, wobei dieser aus Materialien geringerer Kompressibilität als die der Hydraulikflüssigkeit besteht.

6. Wegtransformator nach Anspruch 5,
- bei dem der Körper (12) aus einem Gummiwerkstoff oder aus einem Kunststoff, vorzugsweise Silikonkautschuk, besteht.

7. Wegtransformator nach Anspruch 1,
- bei dem die Hydraulikflüssigkeit nicht aus dem Gehäuse austreten kann, also hermetisch eingeschlossen ist.

8. Wegtransformator nach Anspruch 1,
- bei dem ein Vorratsbehälter (13) vorgesehen ist, aus dem jederzeit austretende Hydraulikflüssigkeit ersetzbar ist.

9. Wegtransformator nach Anspruch 1,
- bei dem einer der beiden oder beide Kolben (3, 4) durch eine Membran (14) ersetzt ist, die in Hubrichtung hohe Nachgiebigkeit besitzt, jedoch den Drücken in der Hydraulikkammer nur minimal nachgibt.

10. Wegtransformator nach Anspruch 1,
- bei dem die bewegten Massen minimiert sind, wozu leichte Materialien für alle bewegten Massen verwendet und die Bauvolumina klein gehalten sind.

11. Wegtransformator nach Anspruch 3,
- bei dem zur Erreichung der Arbeitskraft des Arbeitskolbens (4) ein Druck in der Hydraulikkammer (2) von 2 bis 250 bar, vorzugsweise von 2 bis 70 bar vorgesehen ist, wodurch die Fläche des Arbeitskolbens (4) bestimmt ist.

12. Wegtransformator nach Anspruch 11,
- bei dem die Hydraulikflüssigkeit gasblasenfrei in die Hydraulikkammer (2) eingefüllt ist.

13. Wegtransformator nach Anspruch 1,
- bei dem das definierte Leck der Hydraulikkammer (2) durch einen Ringspalt (15, 15') zwischen einem oder beiden Kolben (3, 4) und dem Gehäuse realisiert ist.

14. Wegtransformator nach Anspruch 1,
- bei dem das definierte Leck der Hydraulikkammer (2) durch einen Kanal (16) zwischen der Hydraulikkammer (2) und einer Ausgleichskammer (17) realisiert ist.

15. Wegtransformator nach Anspruch 14,
- bei dem das Volumen der Ausgleichskammer (17) um den Faktor 2 - 10 größer als dasjenige der Hydraulikkammer (2) ist.

16. Wegtransformator nach Anspruch 1 oder 9,
- bei dem zwischen dem Arbeitskolben (4) und dem Gehäuse eine Druckfeder (6) angeordnet ist, wodurch der Arbeitskolben (4) nach einer Zeit >>5.tₘₐₓ mit Sicherheit eine Position einnimmt, die durch einen Anschlag begrenzt ist.

17. Wegtransformator nach Anspruch 1,
- bei dem ein statischer Druck auf die Hydraulikflüssigkeit ausgeübt wird.

18. Wegtransformator nach Anspruch 1,
- bei dem das Flächenverhältnis zwischen dem Hubkolben (3) und dem Arbeitskolben (4) zwischen 1:1 und 30:1 liegt.

19. Wegtransformator für einen piezoelektrischen Aktor (1) mit Toleranzausgleich in Hubrichtung, bestehend aus:
- einem ersten vom Aktor beaufschlagten Bauteil (8), in das ein zweites Bauteil (7) eingepaßt ist, wobei das zweite Bauteil mit einer zu positionierenden federunterstützten Masse (5) verbunden ist,
- einer viskosen Flüssigkeit (9) die sich zwischen dem ersten und dem zweiten Bauteil (7,8) befindet und durch die eine Auslenkung des ersten Bauteiles (8) auf das zweite Bauteil (7) übertragbar ist, wobei eine bezüglich der Auslenkungsrichtung zeitliche Beabstandung zwischen dem ersten und dem zweiten Bauteil (7,8) derart vorgegeben ist, daß durch eine Ausgleichsströmung der viskosen Flüssigkeit (9) während eines Hubes des Aktors (1) eine maximale Hubzeit tₘₐₓ der zu positionierenden Masse vorgegeben ist, während Ausgleichsvorgänge über den gesamten Hubweg des Wegtransformators in 5 mal tₘₐₓ erfolgen.

20. Wegtransformator nach Anspruch 19,
- bei dem das erste Bauteil (8) einen Zylinder und das zweite Bauteil (7) einen Kolben darstellt,
- bei dem zwischen dem Zylinder und dem Kolben ein Ringspalt verbleibt, der mit der viskosen Flüssigkeit (9) gefüllt ist.

21. Wegtransformator nach Anspruch 19,
- bei dem der Kolben und der Zylinder kegelförmig ausgebildet sind.

22. Wegtransformator nach Anspruch 19,
- bei dem die viskose Flüssigkeit (9) mit zunehmender Scherbelastung eine zunehmende Viskosität aufweist.

23. Wegtransformator nach Anspruch 22,
- bei dem die viskose Flüssigkeit (9) zwischen den beiden Bauteilen (7, 8) hermetisch zur Umgebung hin, vorzugsweise durch eine Gummimanschette, abgeschlossen ist.

24. Wegtransformator nach Anspruch 1,
- bei dem die viskose Flüssigkeit (9) in einem Ausmaß viskos und unempfindlich gegen Umwelteinflüsse ist, daß deren hermetischer Einschluß entfällt.

25. Wegtransformator nach Anspruch 1,
- bei dem die Viskosität der von Fetten entspricht und mehr als 1000 Pa . s beträgt.

26. Wegtransformator nach Anspruch 1 oder 19,
- bei dem die viskose, hydraulische Flüssigkeit (9) in ihrer Viskosität elektrisch beeinflußbar ist.

## Claims

1. Displacement transformer for a piezoelectric actuator (1) with tolerance compensation in the lifting direction, comprising:
- a hydraulic chamber (2) which is filled with a hydraulic liquid,
- a lifting piston (3) which is acted on by the actuator (1) and, together with a working piston (4) and a housing, forms the hydraulic chamber (2),
- in which transformer
- - the working piston (4) is connected to a spring-supported mass (5) which is to be positioned,
- - movements of the actuator (1) can be transmitted via the hydraulic chamber (2) to the mass (5) which is to be positioned.
- - a maximum lifting time tₘₐₓ for the actuator (1) to lift the mass (5) which is to be positioned is predetermined by a predetermined leakage rate in the hydraulic chamber (2), and
- - pistons and housing are made from different materials, the coefficients of thermal expansion of which are selected in such a way that they can be used to virtually compensate for a hydraulic-liquid viscosity which is falling owing to the increasing temperature and a consequent increased throughput of the hydraulic liquid.

2. Displacement transformer according to Claim 1,
- in which the hydraulic chamber (2) is filled with a hydraulic liquid of low compressibility.

3. Displacement transformer according to Claim 2,
- in which the compressibility of the hydraulic liquid is reduced as a result of particles of a material with considerably lower compressibility, the size of which is from 1-100 µm, are added thereto.

4. Displacement transformer according to Claim 3,
- in which the particles consist of a plastics material, of a rubber material or of metal.

5. Displacement transformer according to Claim 4,
- in which some of the hydraulic liquid is replaced by a flexible body (12), the latter consisting of materials of lower compressibility than that of the hydraulic liquid.

6. Displacement transformer according to Claim 5,
- in which the body (12) consists of a rubber material or of a plastics material, preferably silicone rubber.

7. Displacement transformer according to Claim 1,
- in which the hydraulic liquid cannot escape from the housing, i.e. is hermetically sealed inside the housing.

8. Displacement transformer according to Claim 1,
- in which a reservoir (13) is provided, from which escaping hydraulic liquid can be replaced at any time.

9. Displacement transformer according to Claim 1,
- in which one or both pistons (3, 4) is replaced by a diaphragm (14) which yields easily in the lifting direction but yields only to a minimal extent to the pressures in the hydraulic chamber.

10. Displacement transformer according to Claim 1,
- in which the moving masses are minimized, for which purpose lightweight materials are used for all the moving masses and the structural volumes are kept small.

11. Displacement transformer according to Claim 3,
- in which, in order to reach the working force of the working piston (4), a pressure of from 2 to 250 bar, preferably from 2 to 70 bar, is provided in the hydraulic chamber (2), thus determining the area of the working piston (4).

12. Displacement transformer according to Claim 11,
- in which the hydraulic liquid is introduced into the hydraulic chamber (2) without any gas bubbles.

13. Displacement transformer according to Claim 1,
- in which the defined leakage from the hydraulic chamber (2) is produced through an annular gap (15, 15') between one or both pistons (3, 4) and the housing.

14. Displacement transformer according to Claim 1,
- in which the defined leakage from the hydraulic chamber (2) is produced by a passage (16) between the hydraulic chamber (2) and a compensation chamber (17).

15. Displacement transformer according to Claim 14,
- in which the volume of the compensation chamber (17) is greater by a factor of 2 - 10 than that of the hydraulic chamber (2).

16. Displacement transformer according to Claim 1 or 9,
- in which a compression spring (6) is arranged between the working piston (4) and the housing, with the result that the working piston (4), after a time >>5.tₘₐₓ, reliably adopts a position which is limited by a stop.

17. Displacement transformer according to Claim 1,
- in which a static pressure is exerted on the hydraulic liquid.

18. Displacement transformer according to Claim 1,
- in which the area ratio between the lifting piston (3) and the working piston (4) is between 1:1 and 30:1.

19. Displacement transformer for a piezoelectric actuator (1) with tolerance compensation in the lifting direction, comprising,
- a first component (8) on which the actuator acts and into which a second component (7) is fitted, the second component being connected to a spring-supported mass (5) which is to be positioned,
- a viscous liquid (9) which is situated between the first and second components (7, 8) and by means of which a movement of the first component (8) can be transmitted to the second component (7), a temporal interval, with regard to the movement direction, being predetermined between the first and second components (7, 8) in such a manner that a maximum lifting time tₘₐₓ for the mass which is to be positioned during one lift of the actuator (1) is predetermined by a compensating flow of the viscous liquid, while over the entire lifting displacement of the displacement transformer compensating operations take place in 5 times tₘₐₓ.

20. Displacement transformer according to Claim 19,
- in which the first component (8) forms a cylinder and the second component (7) forms a piston,
- in which an annular gap, which is filled with the viscous liquid (9), remains between the cylinder and the piston.

21. Displacement transformer according to Claim 19,
- in which the piston and the cylinder are of conical design.

22. Displacement transformer according to Claim 19,
- in which the viscous liquid (9) has a viscosity which increases as the shear load increases.

23. Displacement transformer according to Claim 22,
- in which the viscous liquid (9) between the two components (7, 8) is hermetically sealed with respect to the environment, preferably by a rubber cuff.

24. Displacement transformer according to Claim 1,
- in which the viscous liquid (9) is so viscous and insensitive to environmental influences that there is no need for it to be hermetically sealed.

25. Displacement transformer according to Claim 1,
- in which the viscosity corresponds to that of greases and is more than 1000 Pa · s.

26. Displacement transformer according to Claim 1 or 19,
- in which the viscosity of the viscous, hydraulic liquid (9) can be influenced by electrical means.

## Revendications

1. Transformateur de déplacement d'un dispositif d'actionnement piézoélectrique (1) avec compensation de tolérance dans le sens de la course, comprenant:
- une chambre hydraulique (2) remplie d'un liquide hydraulique,
- un piston élévateur (3) alimenté par le dispositif d'actionnement (1), qui constitue, conjointement avec un piston moteur (4) et un boîtier, la chambre hydraulique,
dans lequel
-- le piston moteur (4) est relié à une masse (5) soutenue à positionner par ressort,
-- des déports du dispositif d'actionnement (1) peuvent être transmis par la chambre hydraulique (2) jusqu'à la masse à positionner (5),
-- un temps de course maximal tₘₐₓ, lors d'une élévation du dispositif d'actionnement (1) de la masse à positionner (5) est défini à l'avance par un taux de fuite prédéfini à la chambre hydraulique (2), et
-- piston et boîtier sont fabriqués dans différentes matières, dont les coefficients de dilatation thermique sont choisis de manière telle qu'une diminution de la viscosité du liquide hydraulique, due à une température croissante, et un débit ainsi accru du liquide hydraulique sont presque comparables.

2. Transformateur de déplacement selon la revendication 1,
- dans lequel la chambre hydraulique (2) est remplie d'un liquide hydraulique ayant une compressibilité basse.

3. Transformateur de déplacement selon la revendication 2,
- dans lequel la compressibilité du liquide hydraulique est réduite du fait que ses particules sont additionnées d'une matière ayant une compressibilité considérablement plus faible et présentent une grandeur de 1-100 µm.

4. Transformateur de déplacement selon la revendication 3,
- dans lequel les particules sont composées d'une matière synthétique, d'une matière de caoutchouc ou de métal.

5. Transformateur de déplacement selon la revendication 4,
- dans lequel une partie du liquide hydraulique est remplacée par un corps souple (12), celui-ci étant composé de matières ayant une compressibilité plus faible que le liquide hydraulique.

6. Transformateur de déplacement selon la revendication 5,
- dans lequel le corps (12) est composé d'une matière de caoutchouc ou d'une matière synthétique, de préférence de caoutchouc silicone.

7. Transformateur de déplacement selon la revendication 1,
- dans lequel le liquide hydraulique ne peut pas sortir du boîtier, est donc enfermé hermétiquement.

8. Transformateur de déplacement selon la revendication 1,
- dans lequel est prévu un réservoir de stockage (13), à partir duquel peut être remplacé à tout moment un liquide hydraulique débordant.

9. Transformateur de déplacement selon la revendication 1,
- dans lequel l'un des deux ou les deux pistons (3, 4) est remplacé par une membrane (14), qui possède une élasticité élevée dans le sens de la course, en relâchant cependant au minimum seulement la pression dans la chambre hydraulique.

10. Transformateur de déplacement selon la revendication 1,
- dans lequel les masses déplacées sont minimisées, pour ce faire des matières légères sont utilisées pour toutes les masses déplacées et les volumes de construction sont maintenus petits.

11. Transformateur de déplacement selon la revendication 3,
- dans lequel est prévue une pression dans la chambre hydraulique (2) de 2 à 250 bars, de préférence de 2 à 70 bars, pour atteindre la force de travail du piston moteur (4), de cette façon la surface du piston moteur (4) est déterminée.

12. Transformateur de déplacement selon la revendication 11,
- dans lequel le liquide hydraulique est rempli sans bulles de gaz dans la chambre hydraulique (2).

13. Transformateur de déplacement selon la revendication 1,
- dans lequel la fuite définie de la chambre hydraulique (2) est réalisée par un espace annulaire (15, 15') se trouvant entre un ou deux pistons (3, 4) et le boîtier.

14. Transformateur de déplacement selon la revendication 1,
- dans lequel la fuite définie de la chambre hydraulique (2) est réalisée par un canal (16) situé entre la chambre hydraulique (2) et une chambre de compensation (17).

15. Transformateur de déplacement selon la revendication 14,
- dans lequel le volume de la chambre de compensation (17) est de 2 à 10 fois plus grand que celui de la chambre hydraulique (2).

16. Transformateur de déplacement selon la revendication 1 ou 9,
- dans lequel entre le piston moteur (4) et le boîtier est disposé un ressort de pression (6), le piston moteur (4) prenant ainsi avec certitude après un temps >>5.tₘₐₓ une position, qui est limitée par une butée.

17. Transformateur de déplacement selon la revendication 1,
- dans lequel une pression statique est exercée sur le liquide hydraulique.

18. Transformateur de déplacement selon la revendication 1,
- dans lequel le rapport de surfaces entre le piston élévateur (3) et le piston moteur (4) se situe entre 1:1 et 30 :1.

19. Transformateur de déplacement pour un dispositif d'actionnement piézoélectrique (1) avec compensation de tolérance dans le sens de la course, comprenant:
- un premier élément (8) alimenté par le dispositif d'actionnement, dans lequel est encastré un deuxième élément (7), le deuxième élément étant relié à une masse soutenue par ressort à positionner (5),
- un liquide visqueux (9) qui se trouve entre le premier et le deuxième élément (7, 8) et par lequel un déport du premier élément (8) peut être transmis au deuxième élément (7), un intervalle temporel relatif au sens du déport étant prédéfini entre le premier et le deuxième élément (7, 8) de manière telle que par un courant compensateur du liquide visqueux (9) pendant une course du dispositif d'actionnement (1), un temps de course maximal tₘₐₓ de la masse à positionner est prédéfini, alors que des processus de compensation se produisent sur tout le trajet de course du transformateur de déplacement en 5 fois tₘₐₓ.

20. Transformateur de déplacement selon la revendication 19,
- dans lequel le premier élément (8) constitue un cylindre et le deuxième élément (7) constitue un piston,
- dans lequel entre le cylindre et le piston demeure un espace annulaire, qui est rempli avec le liquide visqueux (9).

21. Transformateur de déplacement selon la revendication 19,
- dans lequel le piston et le cylindre sont conçus en forme de cône.

22. Transformateur de déplacement selon la revendication 19,
- dans lequel le liquide visqueux (9) avec une charge de cisaillement croissante présente une viscosité croissante.

23. Transformateur de déplacement selon la revendication 22,
- dans lequel le liquide visqueux (9) situé entre les deux éléments (7, 8) est isolé de façon hermétique par rapport à l'environnement, de préférence par une manchette en caoutchouc.

24. Transformateur de déplacement selon la revendication 1,
- dans lequel le liquide visqueux (9) est visqueux et insensible aux influences extérieures dans une mesure telle que son isolation hermétique est supprimée.

25. Transformateur de déplacement selon la revendication 1,
- dans lequel la viscosité correspond à celle des graisses et s'élève à plus de 1000 Pa.s.

26. Transformateur de déplacement selon la revendication 1 ou 19,
- dans lequel le liquide hydraulique visqueux (9) peut être influencé électriquement dans sa viscosité.
